# EUROPEAN PATENT SPECIFICATION

(11) **EP 2 525 328 B1**
(45) Date of publication and mention of the grant of the patent: **18.10.2017**
(21) Application number: 11166739.0
(22) Date of filing: 19.05.2011
(51) Int. Cl.: G06T 19/00

(54) **Method and apparatus for determining optimal projection images**
Verfahren und Vorrichtung zur Bestimmung optimaler Projektionsbilder
Procédé et appareil permettant de déterminer des images de projection optimales

(43) Date of publication of application: 21.11.2012
(73) Proprietor: Pie Medical Imaging BV, 6227 AJ Maastricht (NL)
(72) Inventor: Schormans, Ron Hubertus, 6417 HM, Heerlen (NL); Reinartz, Rianne, 6162 GM, Geleen (NL); Aben, Jean-Paul, 6141 AB, Limbricht (NL)
(74) Representative: Bessi, Lorenzo

(56) References cited:
- DUMAY A C M ET AL: "DETERMINATION OF OPTIMAL ANGIOGRAPHIC VIEWING ANGLES: BASIC PRINCIPLES AND EVALUATION STUDY", IEEE TRANSACTIONS ON MEDICAL IMAGING, IEEE SERVICE CENTER, PISCATAWAY, NJ, US, vol. 13, no. 1, 1 March 1994 (1994-03-01), pages 13-24, XP000440146, ISSN: 0278-0062, DOI: 10.1109/42.276141
- YOSHINOBU SATO ET AL: "A Viewpoint Determination System for Stenosis Diagnosis and Quantification in Coronary Angiographic Image Acquisition", IEEE TRANSACTIONS ON MEDICAL IMAGING, IEEE SERVICE CENTER, PISCATAWAY, NJ, US, vol. 17, no. 1, 1 February 1998 (1998-02-01), XP011035709, ISSN: 0278-0062
- JAMES CHEN* S ET AL: "3-D Reconstruction of Coronary Arterial Tree to Optimize Angiographic Visualization", IEEE TRANSACTIONS ON MEDICAL IMAGING, IEEE SERVICE CENTER, PISCATAWAY, NJ, US, vol. 19, no. 4, 1 April 2000 (2000-04-01), XP011035955, ISSN: 0278-0062
- SHENGXIAN TU ET AL: "Assessment of obstruction length and optimal viewing angle from biplane X-ray angiograms", THE INTERNATIONAL JOURNAL OF CARDIAC IMAGING, KLUWER ACADEMIC PUBLISHERS, DO, vol. 26, no. 1, 18 September 2009 (2009-09-18), pages 5-17, XP019767390, ISSN: 1573-0743

## Description

### FIELD OF THE INVENTION

The present invention relates to a method and apparatus for determining optimal projection images of an object of interest, particularly angiographic images.

### STATE OF THE ART

During clinical interventions it is important to obtain as much object information as possible to be able to accurately perform a procedure. For this reason the imaging methods usually adopted are those based on the use of apparatus acquiring high resolution volumetric images in order to have a better and more detailed picture of the object under examination.

Such apparatus, like CT and MR machines, besides having a large size and thus being cumbersome and expensive, provide a great amount of image data, whose processing is time-consuming and makes it impossible to perform imaging sessions in real-time. This drawback largely prevents the use of these machines during interventions.

For example in the field of Transcatheter Aortic Valve Implantation (TAVI), an intervention aiming at planning and placing an aortic valve implant, the gold standard imaging technique for selecting the type of valve and its relative positioning is a Multislice CT due to its high spatial resolution. However, such technique can be used only when planning the operation, for example in order to define the size of the valve, since it can be performed neither in real-time nor in a hemodynamic and/or heart surgery room (so called cathlab) during the intervention.

For this reason such type of interventions are generally performed under guidance of 2D images acquired, for example, with angiographic X-ray systems of the so-called C-arm or L-arm type. These systems allow to obtain 2D images, also called 2D projections, of the object under examination. Several perspectives can be obtained by rotating the arm holding the X-ray source and the image intensifier with reference to the patient.

However, bi-dimensional projection images, as those obtained with angiographic systems, suffer from the problem of foreshortening. Foreshortening is the event when an object seems compressed when viewed from a certain perspective, causing distortion of the information. This is particularly critical when, based upon such information, a clinical intervention is planned and/or performed, such as, for example, the placing of a stent in an artery or vessel in general or a valve implant. When using a 2D imaging modality it is therefore important to acquire images from the right perspective.

The views in which an object of interest are visualized with minimum foreshortening are called optimal views as taught by the paper "Determination of optimal angiographic viewing angles: basic principles and evaluation study", Adrie C. M. Dumay, Johan H. C. Reiber, Jan J. Gerbrands, IEEE Trans. Med. Imaging, vol. 13, N. 1, March 1994.

In case of angiographic systems, the correct perspective is defined as the angulations of an X-ray system (both the system rotation and angulation) that contains as much information as possible needed for that procedure. This normally happens when the imaging system is positioned in a plane parallel to the main axis of the object i.e. when the projection is perpendicular to the object.

The most present developments in the field focus on one or multiple optimal projections that can be used during clinical interventions. These optimal projections are determined based solely on foreshortening. See for example Joel A. Garcia et al "Determination of optimal viewing regions for X-ray coronary angiography based on a quantitative analysis of 3D reconstructed models" International Journal of Cardiovascular Imaging, 2009, Volume 25, Number 5, Pages 455-462.

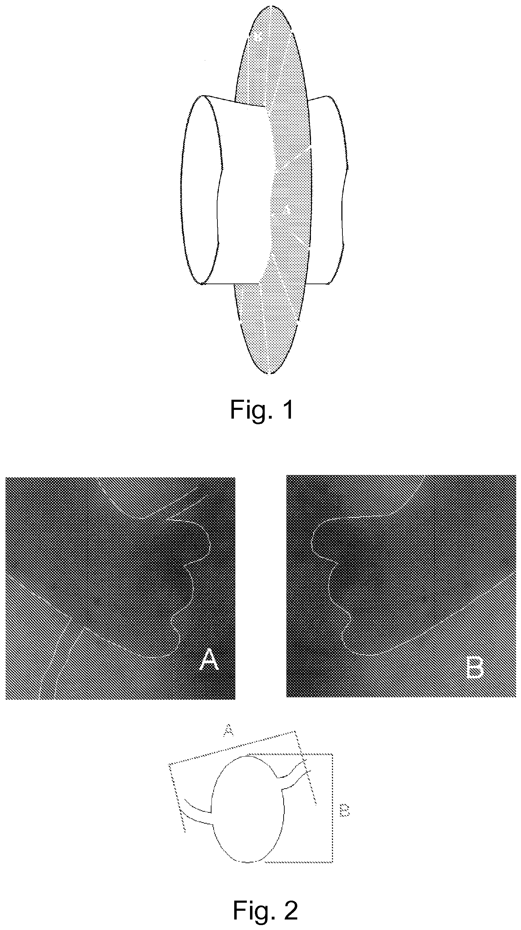

A large drawback of this approach is that it assumes that every optimal projection contains the same amount of information of the imaged object (that is that the imaged object is symmetrical). This leads to a variety of possible optimal projections that do not necessarily contain all the object information present in the images. This results in the potential usage of optimal projections that are only suitable for symmetrical objects. "A Viewpoint Determination System for Stenosis Diagnosis and Quantification in Coronary Angiographic Image Acquisition" by Yoshinobu Sato et al describes a method for finding optimal viewpoints to visualise stenotic lesions. However, as in clinical practice the objects that are dealt with are asymmetrical (see Fig. 1), a recording that is perpendicular to the object does not necessarily contain all the needed information. It would thus be desirable to determine the optimal viewing angle or optimal projection that not only minimizes foreshortening, but also contains all relevant information of the asymmetrical object or device for that clinical intervention.

As the existing developments in the field only focus on the foreshortening aspect, it is presently necessary for a clinician to obtain such an optimal viewing angle by trial and error during an intervention. This procedure is time consuming and is a burden for the patient because several acquisitions, whether or not supported by administration of a contrast agent, have to be made before the desired optimal view has been found. How many acquisitions are needed depends on the experience of the clinician and the patient anatomy.

There's thus a need for a method that would help the clinician to choose the correct perspective from which a three-dimensional object is to be optimally viewed not only in terms of reduction of foreshortening, but also in terms of completeness of shown information. Such information varies from case to case and thus cannot be fixed in advance in each imaging procedure. It is something related to the specific scope an image is taken for.

It is assumed clear that it is the objective of every imaging session to obtain and use as much image information as possible and to restrict the amount of information loss especially with asymmetrical objects. Not every procedure however classifies the same image information as important for the current procedure.

For this reason the prior art is mainly aimed at finding optimal projections reducing the foreshortening problem leaving to the expertise of the clinician the job of finding optimal projections for specific applications with trial and error procedures.

### SUMMARY OF THE INVENTION

It is thus an object of the present invention to provide a method for determining bi-dimensional images having an optimal informative content, particularly for clinical interventions, without using complex apparatus capable of acquiring accurate 3D volumes of the object under investigation and at the same time reducing the number of acquisitions necessary and thus patient exposure to radiation and contrast agent.

Such an object is realized in accordance with a first aspect of the invention by a method for determining optimal projection images of an object, particularly an asymmetrical object, the method comprising the following steps:
a) generating a three-dimensional surface reconstruction of the object from two or more bi-dimensional images of the object which have been obtained from different perspectives;
b) receiving from a user indications for locating a segment of interest on the 3D reconstruction;
c) determining a plane containing optimal view directions in terms of foreshortening for this segment of interest, such as a plane perpendicular to the main orientation of the section of interest,
   wherein
   step b) comprises receiving from the user the position of a point or area of interest in at least one of the bi-dimensional images used for the three-dimensional reconstruction of the object as in step a), the method further comprising the steps of
d) determining, on the three-dimensional surface, a 3D equivalent point of the point or area of interest; characterised in that the method further comprises the step of
e) selecting among the optimal view directions as determined in step c) those going through the 3D equivalent point as defined in step d).

According to the invention not only optimal projections containing the least foreshortening are determined, but, among those, only those having the most image information possible are chosen. Such information is not known a priori, but varies as a function of the type of application considered. In the present invention the information required from the imaging device is adjustable for many purposes because a point of interest is used to determine which object information is classified important for the current procedure and therefore usable for asymmetrical objects. This is the core of the invention. The prior art does not contemplate the problem of providing the best projections for each application as this would amount to a heavy generalization of possible solutions. On the contrary the invention poses this problem and solves it smartly thus facilitating the procedure of determining an optimal projection for an object, maintaining the greatest amount of object information present. Because one optimal projection is supplied for the user, no error guessing is necessary and experience is no longer determinant, which decreases the amount X-ray radiation and of contrast agent needed for obtaining the correct image for the procedure (for those applications requiring usage of contrast agents) and leads to a quicker working time.

According to an embodiment, the plane containing the optimal view directions intersects the three-dimensional surface to obtain a geometric figure having a centre of symmetry. In this case the method advantageously determines the optimal direction as the direction of the line passing through the centre of symmetry and the 3D equivalent point.

The point or area of interest is preferably chosen on at least two of the bi-dimensional images used for the three-dimensional reconstruction of the object. In this case, the 3D equivalent point is determined as a point on the 3D surface the closest to such 3D point.

The choice of the point of area of interest can be completely left to the skill of the user or may be, at least partially, assisted, for example by showing a zone on the second bi-dimensional image where the corresponding point of interest within such second bi-dimensional image is to be expected.

Alternatively the point or area of interest can be selected on only one of the bi-dimensional images used for the three-dimensional reconstruction of the object. In this case the 3D equivalent point can be determined by back-projecting the 3D model onto such bi-dimensional image where the selected point or area of interest lies, finding a point on the bi-dimensional back-projected image the closest to such point or area of interest and determining the point on the 3D model corresponding to such point on the bi-dimensional back-projected image.

Preferably the object or a part thereof is segmented in at least two of the bi-dimensional images used for the three-dimensional reconstruction. The section of interest can manually or automatically be identified on the bi-dimensional images used for the three-dimensional reconstruction of the object or directly located on the 3D model.

According to an embodiment, the at least two bi-dimensional images are angiographic images showing part or the whole aortic root, the point or area of interest being a coronary leaflet, particularly the right coronary leaflet. In this case the optimal projection image is preferably a bi-dimensional image showing the right coronary leaflet in a central position with the posterior and left leaflets respectively located at opposite sides of such right coronary leaflet.

In general all the steps of the method according to the invention are not to be considered strictly in the order presented, but can be equally performed in any other meaningful sequence. For example the point of interest can be defined after the 3D reconstruction. Also the optional segment definition within the 3D reconstruction can be determined before 3D reconstruction and/or the point of interest determination.

The method of the invention is typically performed by a data processing system with access to bi-dimensional images of an object of interest obtained from different perspectives.

The invention also relates to a computer product directly loadable into the memory of a computer and comprising software code portions for performing the method as disclosed above when the product is run on a computer.

According to another aspect, the invention also relates to an apparatus for acquiring bi-dimensional projection images of a tri-dimensional object. The apparatus comprises means for receiving from a user indications on the position of a point or area of interest in at least two bi-dimensional images of the object obtained from different perspectives and processing means programmed for performing the method according to the invention to determine a perspective for obtaining an optimal projection image of the object.

Advantageously, such an apparatus could be the same machine used for acquiring and/or reconstructing the image data, such as CT, MRI, Ultrasound or X-ray machines. Particularly it is an angiographic apparatus of the C-arm or L-arm type with X-ray source and image intensifier respectively located at opposite sides of the arm, such arm being movable at least according to a rotation angle and an angulation angle with reference to a patient to obtain bi-dimensional images from different perspectives, the processing means being programmed to calculate rotation and angulation angles of the arm for obtaining optimal projection images.

According to an embodiment, the angiographic apparatus comprises actuating means to automatically or semi-automatically rotate the arm, and/or display means for providing to a user indications for manually rotating the arm, according to rotation and angulation angles calculated for obtaining an optimal projection image. Advantageously, among two perspectives having the same direction, the processing means is programmed to select the one corresponding to a rotation and angulation angle within the range of possible rotation and angulation angles of the apparatus.

The processing means could be a processor or processors dedicated to perform the method according to the invention or, in a particularly advantageous configuration, the same, or part of the same, processing means that subtends the main image acquisition functionalities of the machine thus obtaining a very compact and powerful apparatus.

Further improvements of the invention will form the subject of the dependent claims.

### BRIEF DESCRIPTION OF THE DRAWINGS

The characteristics of the invention and the advantages derived therefrom will be more apparent from the following description of non-limiting embodiments, illustrated in the annexed drawings, in which:
Fig. 1 is a schematic illustration of all possible optimal projection view directions for an asymmetrical object;
Fig. 2 is a schematic illustration of potential errors in the evaluation of the coronary root from orthogonal views;
Fig. 3 is a flowchart of the invention main steps in a preferred embodiment;
Fig. 4 is a schematic illustration of a 3D reconstruction of an object;
Fig. 5 is the same schematic illustration of FIG 4 with a section of interest indicated;
Fig. 6 shows the beginning and the end of a bi-dimensional section that is used to calculate all possible views perpendicular to the corresponding 3D section;
Fig. 7 is a first angiographic image which shows the aortic root from behind;
Fig. 8 is a second angiographic image which shows the aortic root from below;
Fig. 9 is the image of Fig. 7 segmented and with a coronary leaflet indicated as point of interest;
Fig. 10 is the image of Fig. 8 segmented and with the corresponding coronary leaflet indicated as point of interest;
Fig. 11 is a simplified sketch showing the optimal direction vector for a point of interest;
Fig. 12 shows two optimal views having the same optimal direction;
Fig. 13 is the angiographic image of the same aortic root as in the previous figures obtained from a perspective as determined with the method according to the invention;
FIG 14 is a schematic drawing of the optimal projection image to be used for replacing the aortic leaflet or placing a stent.

### DETAILED DESCRIPTION OF A PREFERRED EMBODIMENT

Fig. 1 shows a tubular organ, like an artery, having an elliptical cross section. All possible optimal projection view directions for this asymmetrical object lie on the indicated grey circle which is perpendicular to the axis of the object. However an optimal projection view direction chosen at point B will contain different object information than an optimal projection view direction chosen from point A. Fig. 2 helps explaining that. This figure shows the difference in coronary artery visibility in the coronary root when looking from different orthogonal views. In this figure the aortic root (shown in lower figure 2 in plant view) is seen from two perspectives. When looking through perspective A the coronary arteries that arise from the aortic root can be seen clearly (see the upper left figure 2), however when looking via perspective B at the same aortic root both coronary arteries are absent in the image information (see the upper right figure 2). The absence of the coronary arteries in the image information can lead to serious complications during an intervention. If, for instance, a stent is placed in front of the coronary arteries the blood flow to the coronary arteries is blocked leading to irreversible damage for the patient.

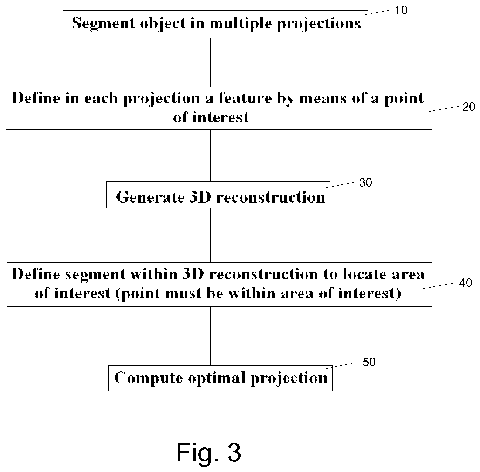

With reference to the block diagram of Fig. 3, an embodiment of the invention is now described.

In this example it is assumed to have at disposal at least two projection images of an object of interest. Any image device capable of providing 2D images can be used for the purpose. For example a bi-plane or single plane angiographic system can be used such as those manufactured, for example, by Siemens (Artis zee Biplane) or Philips (Allura Xper FD).

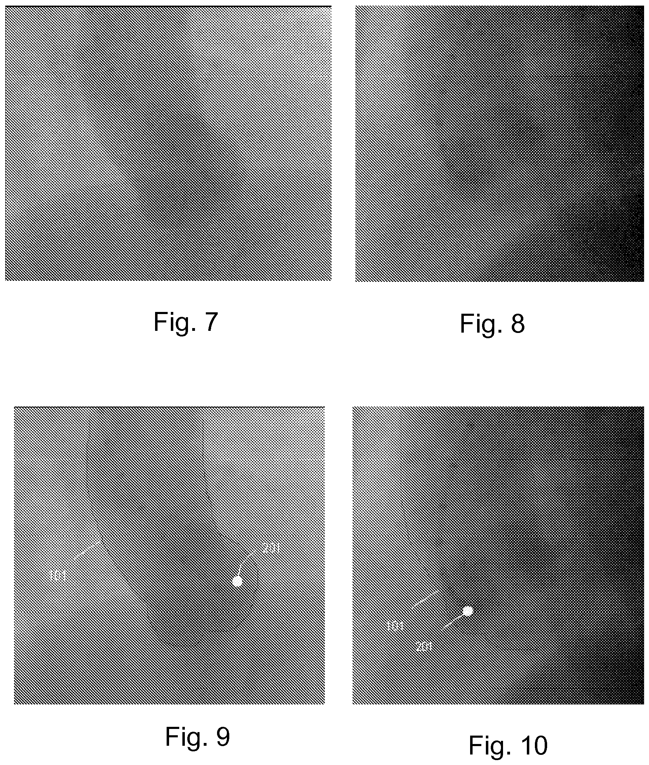

In the step indicated with reference number 10 the object of interest is segmented in each projection image or in at least two of them coming from different perspectives. This can be done according to any known method such as the one disclosed in Y. Jiang et.al. "X-ray image segmentation using active contour model with global constraints" IEEE Symposium on Computational Intelligence in Image and Signal Processing, 2007, CIISP 2007 pages 240-245. The results are projection images with the border 101 of the object of interest overlaid, as for example shown in Fig. 9 and Fig. 10.

In the following step 20 a point of interest is identified by the user in at least two projections. For example in case the object is a coronary root such point can be the right coronary leaflet 201 as indicated in Fig. 9 and Fig. 10.

According to an advantageous embodiment, once the position of the point of interest in the first projection is identified by the user, the system can automatically indicate a region in the second projection to provide a guidance to assist the user in selecting the correct point of interest within such second projection. This is achieved by taking into accounts the properties of the epipolar geometry as taught, for example, by Joon Hee Han et al. "Contour matching using epipolar geometry" Pattern Analysis and Machine Intelligence, Volume 22, Issue 4, April 2000, Pages 358-370.

The next step is the generation of a 3D model (also called three-dimensional reconstruction or three-dimensional surface reconstruction within the present disclosure) starting from the at least two projections identified as step 30. This is known and can be done, for example, according to the paper "A novel dedicated 3-dimensional quantitative coronary analysis methodology for bifurcation lesions", Yoshinobu Onuma, Chrysafios Girasis, Jean-Paul Aben, Giovanna Sarno, Nicolo Piazza, Coen Lokkerbol, Marie-Angel Morel, Patrick W. Serruys, EuroIntervention 2011; 6:1-00.

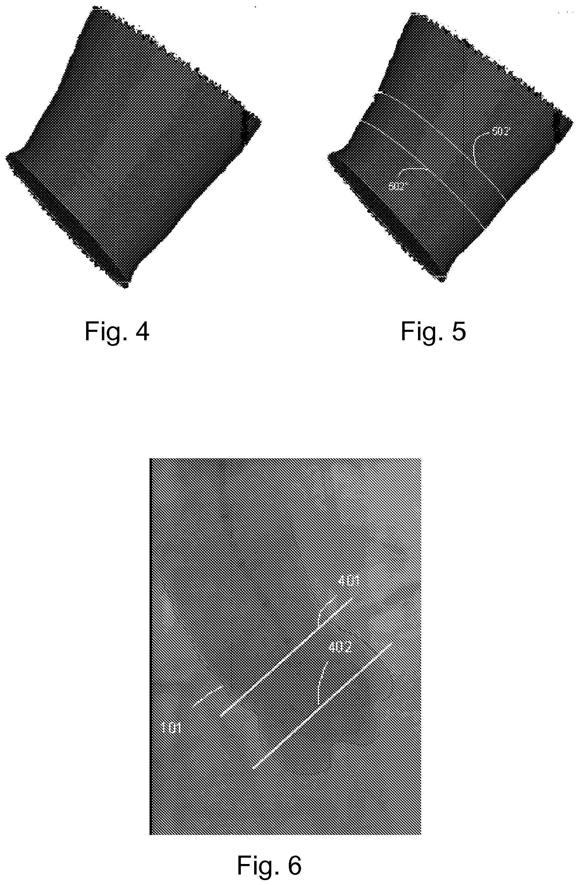

The result of this step is a three-dimensional surface reconstruction of the object of interest as shown in Fig. 4 for the case of a tubular organ.

Because the user is usually interested in a smaller section of the generated 3D model, the user can indicate a sub segment 502', 502" within the 3D model that will be used for further calculations (see Fig. 5). This can be done, for instance, by indicating two lines 401, 402 in one of the 2D images, one representing the beginning and the other representing the end of the wanted segment. This is preferably done in the 2D images because the segment of interest is best seen there. However, this can also be done directly on the 3D model.

Using the feature indicated by the points of interest in step 20 an optimal projection is then determined according to the following steps.

First, all view directions that are perpendicular to the section of interest 502', 502", or to the whole 3D object, are determined. This is done, for example, according to the method described in the paper "Determination of optimal angiographic viewing angles: basic principles and evaluation study", Adrie C. M. Dumay, Johan H. C. Reiber, Jan J. Gerbrands, IEEE Trans. Med. Imaging, vol. 13, N. 1, March 1994.

Using the 3D model (step 30) generated earlier the orientation of the indicated section or the whole 3D object (step 40) can be derived. An optimal view direction is defined as a view direction that is perpendicular to the orientation of the 3D model or a section thereof. Because the model can be looked at from different angles that are all perpendicular to it, this step gives us a various amount of optimal view directions that all lie on planes perpendicular to the object (see figure 1).

Then the points of interest 201 that were indicated in the 2D angiographic images in step 20 are matched. That is a 3D equivalent point for the feature is calculated. This is done using techniques similar to the ones used for the 3D reconstruction as described in step 30.

The 3D equivalent point is then translated to the 3D model that was generated in step 30, being the closest point on the 3D surface of the 3D model. That is the best representation of the 3D point on the 3D surface is found.

In the situation where the user has indicated a point of interest in only one projection, the 3D model is back projected to the projection in which the point was indicated. The point of interest is then matched to the model to find its 3D equivalent. This is preferably achieved when the point of interest is situated in the section of the 3D model facing the user, i.e. the point of interest as indicated by the user does not lie on the backside of the 3D model.

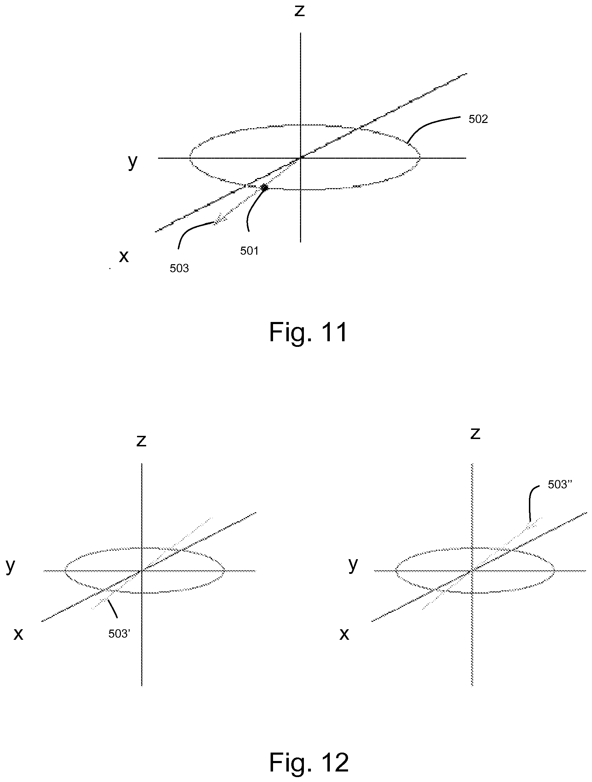

The next step is to select the optimal view direction (from all possible optimal view directions) that also contains the 3D equivalent point 501. This is done by determining a direction vector 503 starting from the centre of the optimal projection outline 502 of the model at the height of the 3D equivalent point 501 and heading outward through such point as shown in Fig. 11.

Because the direction vector 503 is constructed using the plane of possible optimal projection view directions, it is ensured that the direction vector 503 is perpendicular to the indicated section. Also because the direction runs through the 3D equivalent point 501, it is ensured that an optimal projection view derived from this direction vector contains information about the indicated point of interest 201.

From the direction vector 503 two viewing vectors 503', 503" can be determined, one looking along the direction vector and one looking against the direction vector. Each viewing vector 503', 503" represents an image perspective indicated by the angulations of an x-ray system (both the systems rotation and angulation).

One of the two image perspectives will probably lie outside of the range of the used imaging modality, therefore this image perspective cannot be recorded. This can be due, for instance, to the fact that a C-arm can only rotate and/or angulate a certain amount of degrees and is therefore not able to achieve one of the given perspectives.

This will result in the other image perspective being the suitable one. This is dependent on the imaging modality being used.

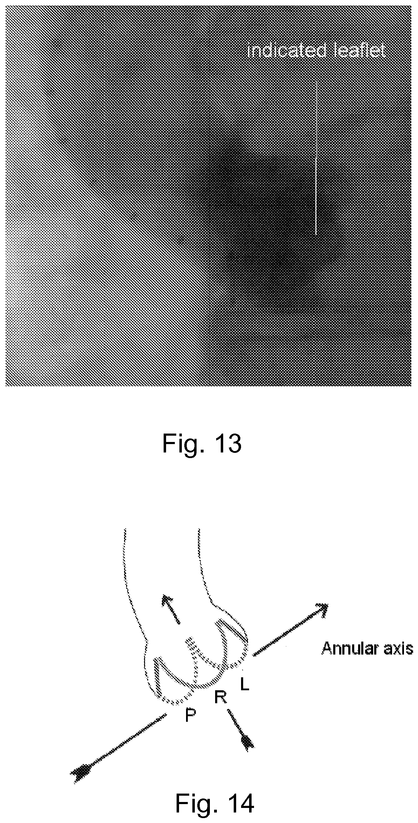

Using this outcome the clinician can then acquire the image that belongs to this optimal projection and continue the procedure with the maximum amount of object information and the least amount of time and burden to the patient spent on finding that information. Fig. 13 shows the optimal projection image obtained processing the two images of Fig. 7 and 8 with a method according to the invention. Fig. 14 is a sketch of the image so obtained which represents a view of the aortic root with the right leaflet R shown between the non-coronary (posterior) P and the left leaflet L of the aortic valve, a perspective considered particularly useful for TAVI procedures.

## Claims

1. Method for determining optimal projection images of an object, particularly an asymmetrical object, the method comprising the following steps:
a) generating a three-dimensional surface reconstruction of the object from two or more bi-dimensional images of the object which have been obtained from different perspectives;
b) receiving from a user indications for locating a segment of interest on the 3D reconstruction;
c) determining a plane containing optimal view directions in terms of foreshortening for this segment of interest, wherein
step b) comprises receiving from the user the position of a point or area of interest (201) in at least one of the bi-dimensional images used for the three-dimensional reconstruction of the object as in step a), the method further comprising the steps of
d) determining, on the three-dimensional surface, a 3D equivalent point (501) of the point or area of interest (201); **characterised in that** the method further comprises the step of
e) selecting among the optimal view directions as determined in step c) those going through the 3D equivalent point (501) as defined in step d).

2. Method according to claim 1, wherein the plane as determined in step c) is perpendicular to the main orientation of the section of interest.

3. Method according to claim 1 or 2, wherein the plane as determined in step c) intersects the three-dimensional surface to obtain a geometric figure having a centre of symmetry.

4. Method according to claim 3, wherein step e) comprises determining the direction (503) of the line passing through the centre of symmetry and the 3D equivalent point (501).

5. Method according to any preceding claim, wherein step d) comprises determining a 3D equivalent point (501) from the point or area of interest (201) on at least one of the bi-dimensional images used for the three-dimensional reconstruction of the object, the 3D equivalent point (501) being determined by back-projecting the 3D model onto such bi-dimensional image where the selected point or area of interest lies, finding a point on the bi-dimensional back-projected image the closest to such point or area of interest, determining the point on the 3D model corresponding to such point on the bi-dimensional back-projected image.

6. Method according to any preceding claim, wherein step d) comprises determining a 3D equivalent point (501) from the point or area of interest on at least two of the bi-dimensional images used for the three-dimensional reconstruction of the object, the 3D equivalent point being a point on the 3D surface the closest to such 3D point.

7. Method according to claim 6, **characterized in** comprising the following steps:
- receiving from the user the position of a point or area of interest in a first bi-dimensional image;
- automatically indicating a region in a second bi-dimensional image to provide a guidance to assist the user in selecting the corresponding point of interest within such second bi-dimensional image;
- receiving from the user the position of such point or area of interest within such region of the second bi-dimensional image.

8. Method according to any preceding claim, wherein the object or a part thereof is segmented in at least two of the bi-dimensional images used for the three-dimensional reconstruction.

9. Method according to any preceding claim, wherein the section of interest (502', 502") is manually or automatically identified on the bi-dimensional images (401, 402) used for the three-dimensional reconstruction of the object.

10. Method according to any preceding claim, wherein a suitable optimal view is determined among those two (503', 503") having the same direction as a function of the modality used for acquiring the bi-dimensional images.

11. Method according to any preceding claim, wherein the at least two bi-dimensional images are angiographic images showing part or the whole aortic root, the point or area of interest being a coronary leaflet, particularly the right coronary leaflet.

12. Method according to claim 11, wherein the optimal projection image is a bi-dimensional image showing the right coronary leaflet in a central position with the posterior and left leaflets respectively located at opposite sides of such right coronary leaflet.

13. A computer product directly loadable into the memory of a digital computer and comprising software code portions for performing the method according to any of the preceding claims when the product is run on a computer.

14. Apparatus for acquiring bi-dimensional projection images of a tri-dimensional object, the apparatus comprising means for receiving from a user indications on the position of a point or area of interest in at least two bi-dimensional images of the object obtained from different perspectives and processing means programmed for performing the method according to any preceding claim to determine a perspective for obtaining an optimal projection image of the object.

15. Apparatus according to claim 14, **characterized in that** it is an angiographic apparatus of the C-arm or L-arm type with X-ray source and image intensifier respectively located at opposite sides of the arm, such arm being movable at least according to a rotation angle and an angulation angle with reference to a patient to obtain bi-dimensional images from different perspectives, the processing means being programmed to calculate rotation and angulation angles of the arm for obtaining optimal projection images.

16. Apparatus according to claim 15, further comprising actuating means to automatically or semi-automatically rotate the arm, and/or display means for providing to a user indications for manually rotating the arm, according to rotation and angulation angles calculated for obtaining an optimal projection image.

17. Apparatus according to claim 15 or 16, wherein among two perspectives having the same direction, the processing means is programmed to select the one corresponding to a rotation and angulation angle within the range of possible rotation and angulation angles of the apparatus.

## Patentansprüche

1. Verfahren zur Bestimmung von optimalen Projektionsbildern eines Objekts, insbesondere eines asymmetrischen Objekts, wobei das Verfahren die folgenden Schritte umfasst:
a) Erzeugen einer dreidimensionalen Oberflächenrekonstruktion des Objekts aus zwei oder mehr zweidimensionalen Bildern des Objekts, die aus verschiedene Perspektiven erhalten wurden;
b) Angabe Empfangen von einem Benutzer um einen interessierenden Abschnitt für die 3D-Rekonstruktion zu lokalisieren;
c) Bestimmen einer Ebene, die optimale Ansichten in Bezug auf die Verkürzung für diesen interessierenden Abschnitt enthält für dieses Segment von Interesse,
worin
Schritt b) das Empfangen von einem Benutzer der Position eines Punktes oder eines Bereichs von Interesse (201) in mindestens einer der zweidimensionalen Bilder umfasst, die für die dreidimensionale Rekonstruktion des Objekts gebraucht werden wie in Schritt a) verwendet werden, wobei das Verfahren ferner die Schritte umfasst:
d) Bestimmen, auf der dreidimensionalen Oberfläche, eines 3D-Äquivalenzpunktes (501) des interessierenden Punktes oder Bereich von Interesse (201);
wobei das Verfahren ferner die Schritte umfasst
e) Auswählen unter den in Schritt c) ermittelten optimalen Ansichten, die das 3D-Äquivalenzpunkt (501) enthalten, wie in Schritt d) definiert

2. Verfahren nach Anspruch 1, wobei die in Schritt c) bestimmte Ebene senkrecht zur Hauptorientierung des interessierenden Abschnitts ist.

3. Verfahren nach Anspruch 1 oder 2, wobei die in Schritt c) bestimmte Ebene die dreidimensionale Oberfläche schneidet, um eine geometrische Figur mit einem Symmetriezentrum zu erhalten.

4. Verfahren nach Anspruch 3, wobei der Schritt e) das Bestimmen der Richtung (503) der durch das Symmetriezentrum und den 3D-Äquivalenzpunkt (501) verlaufenden Linie umfasst.

5. Verfahren nach einem der vorhergehenden Ansprüche, wobei der Schritt d) das Bestimmen eines 3D-Äquivalenzpunktes (501) von dem Punkt oder Gebiet von Interesse (201) auf mindestens einem der zweidimensionalen Bilder umfasst, die für die dreidimensionale Rekonstruktion des Objekts verwendet werden Wobei der 3D-Äquivalenzpunkt (501) durch Rückprojektion des 3D-Modells auf ein solches zweidimensionales Bild bestimmt wird, in dem der ausgewählte Punkt oder das interessierende Bereich liegt, wobei ein Punkt auf dem zweidimensionalen rückprojizierten Bild gefunden wird, der dem Punkt am nächsten liegt Oder Bereich von Interesse, die Bestimmung des Punktes auf dem 3D-Modell, das diesem Punkt auf dem zweidimensionalen zurückprojizierten Bild entspricht.

6. Verfahren nach einem der vorhergehenden Ansprüche, wobei der Schritt d) das Bestimmen eines 3D-Äquivalenzpunktes (501) von dem interessierenden Punkt oder Gebiet von mindestens zwei der zweidimensionalen Bilder umfasst, die für die dreidimensionale Rekonstruktion des Objekts, der 3D, verwendet werden Äquivalent Punkt ist ein Punkt auf der 3D-Oberfläche am nächsten zu einem solchen 3D-Punkt.

7. Verfahren nach Anspruch 6, **dadurch gekennzeichnet, dass** es die folgenden Schritte umfasst:
- Empfangen der Position eines Punktes oder Bereichs von Interesse in einem ersten zweidimensionalen Bild vom Benutzer;
- automatisches Anzeigen eines Bereichs in einem zweiten zweidimensionalen Bild, um eine Führung bereitzustellen, um den Benutzer bei der Auswahl des entsprechenden interessierenden Punktes innerhalb eines solchen zweiten zweidimensionalen Bildes zu unterstützen;
- Empfangen der Position eines solchen Punktes oder Bereichs von Interesse innerhalb eines solchen Bereichs des zweiten zweidimensionalen Bildes.

8. Verfahren nach einem der vorhergehenden Ansprüche, wobei das Objekt oder ein Teil davon in mindestens zwei der für die dreidimensionale Rekonstruktion verwendeten zweidimensionalen Bilder segmentiert ist.

9. Verfahren nach einem der vorhergehenden Ansprüche, wobei der interessierende Abschnitt (502', 502 ") manuell oder automatisch auf den für die dreidimensionale Rekonstruktion des Objekts verwendeten zweidimensionalen Bildern (401, 402) identifiziert wird.

10. Verfahren nach einem der vorhergehenden Ansprüche, wobei unter diesen zwei (503', 503") eine geeignete optimale Sichtweise mit der gleichen Richtung wie die Funktion der zum Erfassen der zweidimensionalen Bilder verwendeten Modalität bestimmt wird.

11. Verfahren nach einem der vorhergehenden Ansprüche, bei dem die mindestens zwei zweidimensionalen Bilder angiographische Bilder sind, die einen Teil oder die gesamte Aortenwurzel zeigen, wobei der interessierende Punkt oder Gebiet ein Koronarblatt ist, insbesondere das rechte Koronarblatt.

12. Verfahren nach Anspruch 11, wobei das optimale Projektionsbild ein zweidimensionales Bild ist, das das rechte Koronarblatt in einer zentralen Position zeigt, wobei die hinteren und linken Blättchen jeweils an gegenüberliegenden Seiten eines solchen rechten Koronarblättchens angeordnet sind.

13. Ein Computerprodukt, das direkt in den Speicher eines digitalen Computers geladen werden kann und Softwarecodeabschnitte enthält, um das Verfahren nach einem der vorhergehenden Ansprüche durchzuführen, wenn das Produkt auf einem Computer ausgeführt wird.

14. Vorrichtung zum Erfassen von zweidimensionalen Projektionsbildern eines dreidimensionalen Objekts, wobei die Vorrichtung Mittel umfasst, um von einer Benutzeranzeige auf die Position eines Punktes oder Bereichs von Interesse in mindestens zwei zweidimensionalen Bildern des aus verschiedenen Perspektiven erhaltenen Objekts zu empfangen Und eine Verarbeitungseinrichtung, die zum Durchführen des Verfahrens nach einem der vorhergehenden Ansprüche programmiert ist, um eine Perspektive zum Erhalten eines optimalen Projektionsbildes des Objekts zu bestimmen.

15. Vorrichtung nach Anspruch 14, **dadurch gekennzeichnet, daß** es sich um eine angiographische Vorrichtung des C-Arms oder L-Arm-Typs mit Röntgenquelle und Bildverstärker handelt, die jeweils an gegenüberliegenden Seiten des Arms angeordnet sind, wobei dieser Arm zumindest gemäß Einen Drehwinkel und einen Angulations winkel mit Bezug auf einen Patienten, um zweidimensionale Bilder aus verschiedenen Perspektiven zu erhalten, wobei die Verarbeitungseinrichtung programmiert ist, um Rotations- und Angulations winkel des Arms zu berechnen, um optimale Projektionsbilder zu erhalten.

16. Vorrichtung nach Anspruch 15, ferner mit einer Betätigungseinrichtung zum automatischen oder halbautomatischen Drehen des Arms und / oder einer Anzeigeeinrichtung zum Bereitstellen von Benutzeranweisungen zum manuellen Drehen des Arms gemäß Drehung und Angulations winkeln, die zum Erhalten eines optimalen Projektionsbildes berechnet werden.

17. Vorrichtung nach Anspruch 15 oder 16, bei der unter zwei Perspektiven mit der gleichen Richtung die Verarbeitungseinrichtung programmiert ist, um diejenige auszuwählen, die einem Rotations- und Angulations winkel innerhalb des Bereichs möglicher Rotations- und Angulations winkel der Vorrichtung entspricht.

## Revendications

1. Méthode pour déterminer les images de projection optimales d'un objet, et plus particulièrement d'un objet asymétrique, composée des étapes suivantes :
a) générer la reconstruction de surface tridimensionnelle de l'objet à partir d'au moins deux images bidimensionnelles de l'objet, représentant des perspectives différentes ;
b) recevoir auprès d'un utilisateur des indications pour localiser un segment d'intérêt sur la reconstruction 3D ;
c) déterminer un plan contenant des directions de visualisation optimales pour raccourcir ce segment d'intérêt,
où
l'étape b) consiste à recevoir de la part de l'utilisateur la position d'un point ou d'une zone d'intérêt (201) dans au moins une des images bidimensionnelles utilisées pour la reconstruction tridimensionnelle de l'objet comme dans l'étape a), la méthode comprenant également les étapes :
d) déterminer, sur la surface tridimensionnelle, un point d'équivalent 3D (501) du point ou de la zone d'intérêt (201) ;
avec comme étape supplémentaire
e) sélectionner, parmi les directions de visualisation optimales déterminées dans l'étape c), celles qui passent par le point d'équivalent 3D (501) défini dans l'étape d).

2. Méthode correspondant à la revendication 1, où le plan déterminé à l'étape c) est perpendiculaire à l'orientation principale de la section d'intérêt.

3. Méthode correspondant à la revendication 1 ou 2, où le plan déterminé à l'étape c) croise la surface tridimensionnelle pour obtenir une figure géométrique avec un centre de symétrie.

4. Méthode correspondant à la revendication 3, où l'étape e) consiste à déterminer la direction (503) de la ligne passant par le centre de symétrie et par le point d'équivalent 3D (501).

5. Méthode correspondant à n'importe laquelle des revendications précédentes, où l'étape D consiste à déterminer un point d'équivalent 3D (501) à partir du point ou de la zone d'intérêt (201) sur au moins une des images bidimensionnelles utilisées pour la reconstruction tridimensionnelle de l'objet, le point d'équivalent 3D (501) étant déterminé par la rétroprojection du modèle 3D sur ladite image bidimensionnelle comprenant le point ou la zone d'intérêt, à trouver un point sur l'image bidimensionnelle rétroprojetée la plus proche dudit point ou zone d'intérêt et à déterminer le point sur le modèle 3D correspondant à un tel point sur l'image bidimensionnelle rétroprojetée.

6. Méthode correspondant à n'importe laquelle des revendications précédentes, où l'étape d) consiste à déterminer un point d'équivalent 3D (501) à partir du point ou de la zone d'intérêt sur au moins deux des images bidimensionnelles utilisées pour la reconstruction tridimensionnelle de l'objet, le point d'équivalent 3D étant un point sur la surface 3D la plus proche d'un tel point 3D.

7. Méthode correspondant à la revendication 6, qui comprend les étapes suivantes :
- recevoir de l'utilisateur la position d'un point ou d'une zone d'intérêt dans une première image bidimensionnelle;
- désigner automatiquement une région dans une deuxième image bidimensionnelle pour guider et assister l'utilisateur dans la sélection du point d'intérêt correspondant dans ladite image bidimensionnelle;
- recevoir de l'utilisateur la position dudit point ou zone d'intérêt dans cette région de la deuxième image bidimensionnelle.

8. Méthode correspondant à n'importe laquelle des revendications précédentes, où l'objet ou une partie de celui-ci sont segmentés en, au moins, deux des images bidimensionnelles utilisées pour la reconstruction tridimensionnelle.

9. Méthode correspondant à n'importe laquelle des revendications précédentes, où la section d'intérêt (502', 502") est manuellement ou automatiquement identifiée sur les images bidimensionnelles (401, 402) utilisées pour la reconstruction tridimensionnelle de l'objet.

10. Méthode correspondant à n'importe laquelle des revendications précédentes, où une visualisation optimale adaptée est déterminée parmi ces deux valeurs (503', 503") avec la même direction, pour servir de fonction à la modalité utilisée pour acquérir les images bidimensionnelles.

11. Méthode correspondant à n'importe laquelle des revendications précédentes, où au moins deux images bidimensionnelles sont des images angiographiques illustrant une partie ou la totalité d'une racine aortique, le point ou la zone d'intérêt étant une cuspide coronaire, en particulier la cuspide coronaire droite.

12. Méthode correspondant à la revendication 11, où l'image de projection optimale est une image bidimensionnelle montrant la cuspide coronaire droite en position centrale, les cuspides gauche et postérieure étant chacune située à l'opposé de ladite cuspide coronaire droite.

13. Un produit informatique pouvant être directement téléchargé dans la mémoire d'un ordinateur numérique et comprenant des portions de code logiciel pour exécuter la méthode conformément à n'importe laquelle des revendications précédentes lorsque le produit est exécuté sur un ordinateur.

14. Appareil pour l'acquisition d'images de projection bidimensionnelles d'un objet tridimensionnel, l'appareil comprenant des méthodes de réception des indications de l'utilisateur concernant la position d'un point ou d'une zone d'intérêt, sur au moins deux images bidimensionnelles d'un objet, obtenues à partir de perspectives différentes, ainsi que des méthodes de traitement programmées pour exécuter la méthode correspondant à n'importe laquelle des revendications précédentes permettant de déterminer une perspective pour obtenir une image de projection optimale de l'objet.

15. Appareil correspondant à la revendication 14, il s'agit d'un appareil angiographique de type C-arm ou L-arm avec source de rayons X et amplificateur d'image, respectivement situés aux extrémités opposées du bras, où ledit bras est articulé au minimum en accord avec un angle de rotation et un angle d'angulation par rapport au patient, afin d'obtenir des images bidimensionnelles de perspectives différentes, les méthodes de traitement étant programmées pour calculer les angles de rotation et d'angulation du bras de manière à obtenir des images de projection optimales.

16. Appareil correspondant à la revendication 15, comportant, en plus, des méthodes d'actionnement permettant de faire pivoter le bras, de manière automatique ou semi-automatique, et/ou des méthodes d'affichage offrant à l'utilisateur des indications permettant de faire pivoter manuellement le bras, en accord avec les angles de rotation et d'angulation calculés, pour obtenir une image de projection optimale.

17. Appareil correspondant à la revendication 15 ou 16, où, parmi deux perspectives partageant la même direction, le moyen de traitement est programmé pour sélectionner celle correspondant à un angle de rotation et d'angulation dans la plage des angles de rotation et d'angulation possibles de l'appareil.
